# DEMANDE DE BREVET EUROPEEN

(11) **EP 1 613 113 A1**
(43) Date de publication de la demande: **04.01.2006**
(21) Numéro de dépôt: 04291471.3
(22) Date de dépôt: 11.06.2004
(51) Int. Cl.: H04Q 7/38

(54) **Procédé et système d'optimisation des communications téléphoniques mobile à l'étranger**

(71) Demandeur: Axalto SA, 92120 Montrouge (FR)
(72) Inventeur: Brun, Jérôme, c/o Axalto SA, 92120 Montrouge (FR)

(57) **Abrégé**

La présente invention concerne un procédé et un objet (10) portable comportant des moyens (100) de traitement à microprocesseur (MP) coopérant avec des moyens (11) de traitement d'un terminal (1) permettant l'établissement de communications téléphoniques dans au moins une zone géographique couverte par au moins un réseau d'opérateur de télécommunication (N1, N2), caractérisé en ce qu'il comporte des moyens de sélectionner un réseau d'opérateur, parmi une pluralité de réseaux d'opérateurs (N1, N2), en fonction de la différence entre un taux d'usage attendu (TUA) et un taux d'usage effectif (TUE) pour chaque opérateur.

## Description

La présente invention concerne le domaine des télécommunications et en particulier la téléphonie sans fil, notamment au cours des voyages à l'étranger des souscripteurs d'abonnement de téléphonie sans fil.

Dans le domaine de la téléphonie sans fil, les souscripteurs d'abonnement peuvent utiliser leur téléphone portable même lorsqu'ils voyagent à l'étranger. Cette utilisation des abonnements téléphoniques à l'étranger est définie sous le terme de « roaming » (qui signifie « voyager au loin » en anglais) et repose sur des accords passés entre les opérateurs téléphoniques des différents pays.

Il est connu dans l'art antérieur, par la demande de brevet WO 02/01905, un procédé permettant de contrôler l'établissement de communications d'un souscripteur d'abonnement en déplacement en dehors de la zone de couverture du réseau de l'opérateur auprès duquel il possède un abonnement, sur la base des « droits du souscripteur à accéder au réseau d'un autre opérateur ». Ce procédé permet de vérifier que le souscripteur est autorisé à utiliser son téléphone à l'étranger, mais ne permet pas de sélectionner préférentiellement un réseau d'opérateur particulier, sur la base d'informations telles que le prix des communications avec chacun des réseaux des opérateurs accessibles au souscripteur.

Il est connu dans l'art antérieur, par les demandes de brevet EP 1334639, EP 1185118 et WO 9930479, des procédés permettant à un souscripteur d'abonnement d'établir des communications via différents réseaux d'opérateurs sélectionnés d'après « les prix des communications ». Ces procédés permettent au terminal de l'utilisateur, de connaître les prix pratiqués par les différents opérateurs et de choisir, automatiquement ou manuellement, le plus avantageux à utiliser. Cependant, les prix pratiqués par les opérateurs peuvent varier selon l'heure et le jour de l'appel, sa durée, son origine et sa destination, par exemple. De tels procédés ne prennent pas en compte ces paramètres dans le choix de l'opérateur à utiliser.

Il est connu dans l'art antérieur, par la demande de brevet WO 0232181, un procédé permettant le choix de l'opérateur « le plus avantageux financièrement », en fonction de l'heure et du jour de l'appel, de sa durée etc. Ce procédé permet la sélection automatique ou manuelle de l'opérateur avec lequel la communication sera la moins coûteuse à « un moment donné dans le temps ». Cependant, les prix pratiqués par les opérateurs entre eux dépendent de la quantité de communications établies. Les opérateurs établissent leur prix selon des tranches de volume horaire (quantité de communications). Ce procédé ne permet la prise en compte des quotas de communications définis dans les accords passés entre les opérateurs.

Les différentes solutions de l'art antérieur permettent donc l'établissement de listes d'opérateurs étrangers, classés en fonction des prix de leurs services. Ces listes d'opérateurs préférés sont stockées dans la carte à puce de chaque souscripteur d'abonnement (carte SIM, pour « module d'identification du souscripteur » ou « Subscriber Identity Module », selon la terminologie anglaise). Cette liste stockée dans la carte SIM permet au téléphone du souscripteur d'abonnement de choisir de se connecter à l'opérateur le moins cher. Cette solution présente un inconvénient dû au fait que les accords entre les opérateurs téléphoniques définissent des quantités minimum de communications à partir desquelles les tarifs préférentiels peuvent être appliqués. Le choix de l'opérateur à utiliser ne dépend donc pas seulement du tarif minimum de chaque opérateur mais dépend, en temps réel, de la quantité totale de communications passées avec chacun des opérateurs et donc de la quantité de communications passées par un utilisateur avec un opérateur.

La présente invention a pour but de pallier certains inconvénients de l'art antérieur en proposant un objet portable permettant l'optimisation des consommations téléphoniques à l'étranger par une sélection des réseaux des opérateurs téléphoniques en fonction de critères prenant en compte les consommations de communications effectuées avec chacun de ces réseaux d'opérateurs.

Ce but est atteint par un objet portable comportant des moyens de sélectionner un réseau d'opérateur, parmi une pluralité de réseaux d'opérateurs, en fonction de la différence entre un taux d'usage attendu et un taux d'usage effectif pour chaque opérateur.

Selon une autre particularité, l'objet portable comporte des moyens de traitement à microprocesseur coopérant avec des moyens de traitement d'un terminal permettant l'établissement de communications téléphoniques dans au moins une zone géographique couverte par au moins un réseau d'opérateur de télécommunication et comporte :
- des moyens de mémorisation contenant une table pour le stockage d'une liste hiérarchisée de réseaux d'opérateurs utilisables pour chaque zone géographique, classés selon un critère prenant en compte les consommations de communications effectuées avec chacun de ces réseaux d'opérateurs, une table pour le stockage du taux d'usage attendu pour chaque réseau d'opérateur de la liste et une table pour le stockage du taux d'usage effectif pour chaque réseau d'opérateur de la liste ;
- des moyens de traitement comportant une fonction de mesure du taux d'usage effectif de chaque réseau d'opérateur de la liste, une fonction de modification de la hiérarchie de la liste selon l'évolution du taux d'usage effectif, par rapport au taux d'usage attendu, pour chacun des réseaux d'opérateur de la liste et une fonction de transmission, au terminal, d'informations d'accès au réseau d'opérateur constituant un extremum de la liste hiérarchisée.

Selon une autre particularité, l'extremum est le niveau le plus élevé de la hiérarchie.

Selon une autre particularité, l'extremum est le niveau le plus bas de la hiérarchie.

Selon une autre particularité, la fonction de mesure du taux d'usage effectif de chaque réseau de la liste est une fonction d'incrémentation d'un compteur affecté à un opérateur, d'une unité à chaque communication établie avec le réseau de l'opérateur.

Selon une autre particularité, la fonction de mesure du taux d'usage effectif de chaque réseau de la liste est une fonction d'incrémentation d'un compteur affecté à un opérateur, d'un incrément correspondant à la durée de la communication établie avec le réseau de l'opérateur.

Selon une autre particularité, l'objet portable comporte des moyens de mesure de la durée des communications établies avec les réseaux d'opérateurs.

Selon une autre particularité, les moyens de traitement de l'objet portable exécutent une application pour la mesure du taux d'usage effectif de chaque réseau de la liste, pour la consultation et la mise à jour du contenu des tables stockées dans les moyens de mémorisation de l'objet portable et pour la transmission, au terminal, des informations d'accès au réseau d'opérateur constituant un extremum de la liste hiérarchisée.

Selon une autre particularité, la table de stockage du taux d'usage attendu pour chaque réseau d'opérateur comporte également les tarifs préférentiels appliqués par chaque opérateur lorsque leur taux d'usage attendu est atteint et l'objet portable comporte une fonction de classement des réseaux d'opérateurs selon ces tarifs, déclenchée à la place de la fonction de modification de la hiérarchie de la liste selon le taux d'usage effectif, lorsque les taux d'usage effectifs ont atteints la valeur des taux d'usages attendus pour tous les réseaux.

Selon une autre particularité, l'objet portable est un module d'identification de souscripteur d'abonnement, dit carte SIM.

Un autre but de la présente invention est de proposer un terminal pour l'utilisation de l'objet portable selon l'invention, permettant l'optimisation des consommations téléphoniques à l'étranger par une sélection des réseaux des opérateurs téléphoniques en fonction de critères prenant en compte les consommations de communications effectuées avec chacun de ces réseaux d'opérateurs.

Ce but est atteint par un terminal pour l'utilisation de l'objet portable selon l'invention, caractérisé en ce qu'il comporte des moyens de détermination de l'identité d'au moins une zone géographique couverte par plusieurs réseaux d'opérateurs, des moyens d'envoi d'une requête de sélection d'un réseau à l'objet portable, des moyens de réception des informations d'accès au réseau sélectionné par l'objet portable, des moyens d'établissement d'une communication avec le réseau sélectionné et des moyens de signalement du début et de la fin d'une communication à l'objet portable, pour prise en compte de la communication avec le réseau d'opérateur par l'objet portable dans un taux d'usage effectif.

Selon une autre particularité, le terminal comporte des moyens de transmission à l'objet portable d'un taux d'usage attendu par le réseau d'opérateur sélectionné, pour les utilisateurs d'un réseau d'opérateur d'une autre zone géographique.

Selon une autre particularité, le terminal comporte des moyens de mesure de la durée des communications établies avec chacun des réseaux d'opérateurs.

Selon une autre particularité, le terminal comporte des moyens de traitement exécutant une application, coopérant avec l'application exécutée sur les moyens de traitement de l'objet portable et permettant l'interactivité de l'utilisateur avec le terminal, via des moyens d'affichage et de saisie du terminal, pour l'établissement de communications téléphoniques dans au moins une zone géographique couverte par plusieurs réseaux d'opérateurs différents.

Selon une autre particularité, le terminal est un téléphone sans fil.

Un autre but de la présente invention est de proposer un procédé pour l'établissement de communications téléphoniques dans au moins une zone géographique couverte par plusieurs réseaux d'opérateurs différents.

Ce but est atteint par un procédé d'établissement de communications téléphoniques dans au moins une zone géographique couverte par plusieurs réseaux d'opérateurs différents, caractérisé en ce qu'il comporte au moins les étapes suivantes :
- envoi, par le terminal, d'une requête de sélection d'un réseau d'opérateur à l'objet portable ;
- consultation, par des moyens de traitement de l'objet portable, d'une table stockée dans des moyens de mémorisation de l'objet portable et contenant une liste hiérarchisée de réseaux d'opérateurs utilisables dans chaque zone géographique, classés en fonction de la différence entre le taux d'usage attendu et le taux d'usage effectif de chaque réseau d'opérateur, puis sélection d'un réseau d'opérateur constituant un extremum de la liste hiérarchisée ;
- mémorisation du taux d'usage effectif du réseau d'opérateur sélectionné, par mise à jour, à chaque communication, d'une table stockée dans les moyens de mémorisation de l'objet portable et contenant les taux d'usage effectifs pour chaque réseau d'opérateur ;
- comparaison, pour l'opérateur sélectionné, entre le taux d'usage effectif mis à jour et le taux d'usage attendu, puis, le cas échéant, modification de l'ordre de la liste hiérarchisée des réseaux d'opérateurs utilisables dans la zone géographique.

Selon une autre particularité, le procédé comporte une étape d'établissement d'une communication téléphonique par le terminal avec un réseau d'opérateur constituant un extremum de la liste hiérarchisée et de mesure de l'usage en cours pour le réseau d'opérateur sélectionné.

Selon une autre particularité, le procédé comporte une étape préalable d'enregistrement, dans les moyens de mémorisation de l'objet portable, d'une table pour le stockage d'une liste hiérarchisée de réseaux d'opérateurs utilisables pour chaque zone géographique, classés en fonction de la différence entre un taux d'usage attendu et un taux d'usage effectif de chaque réseau d'opérateur, d'une table pour le stockage du taux d'usage attendu pour chaque réseau d'opérateur de la liste et d'une table pour le stockage du taux d'usage effectif pour chaque réseau d'opérateur de la liste.

Selon une autre particularité, l'étape préalable d'enregistrement des tables dans les moyens de mémorisation de l'objet portable est contrôlée par le réseau d'opérateur auquel est abonné le souscripteur d'abonnement utilisant l'objet portable, cette étape étant réalisée avant l'entrée de l'utilisateur dans ladite zone géographique, non couverte par le réseau auquel il est abonné et couverte par plusieurs réseaux d'opérateurs différents.

Selon une autre particularité, l'étape préalable d'enregistrement des tables dans les moyens de mémorisation de l'objet portable est contrôlée par un des réseaux d'opérateurs couvrant ladite zone géographique, cette étape étant réalisée après l'entrée de l'utilisateur dans ladite zone géographique, non couverte par le réseau auquel il est abonné et couverte par plusieurs réseaux d'opérateurs différents.

Selon une autre particularité, le procédé comporte une étape de transmission, par le terminal, à l'objet portable, du taux d'usage attendu par le réseau d'opérateur sélectionné, pour les utilisateurs d'un réseau d'opérateur d'une autre zone géographique.

Selon une autre particularité, le procédé comporte une étape de consultation d'une table stockée dans les moyens de mémorisation de l'objet portable et contenant les taux d'usage attendus pour chaque réseau d'opérateur, une étape de vérification que le taux d'usage attendu de l'opérateur est atteint et une étape de modification de l'ordre de la liste hiérarchisée des réseaux d'opérateurs utilisables dans la zone géographique consistant, lorsque les taux d'usage effectifs ont atteints la valeur des taux d'usage attendus pour tous les réseaux, en un classement des réseaux d'opérateurs selon les tarifs préférentiels appliqués par chaque opérateur.

Selon une autre particularité, l'étape d'envoi, par le terminal, d'une requête de sélection d'un réseau d'opérateur à l'objet portable est précédée d'une étape de détermination de la zone géographique dans laquelle l'utilisateur se trouve, suite à une étape de détection d'un changement de pays lors de l'initialisation du terminal de l'utilisateur.

D'autres particularités et avantages de la présente invention apparaîtront plus clairement à la lecture de la description ci-après, faite en référence aux dessins annexés, dans lesquels :

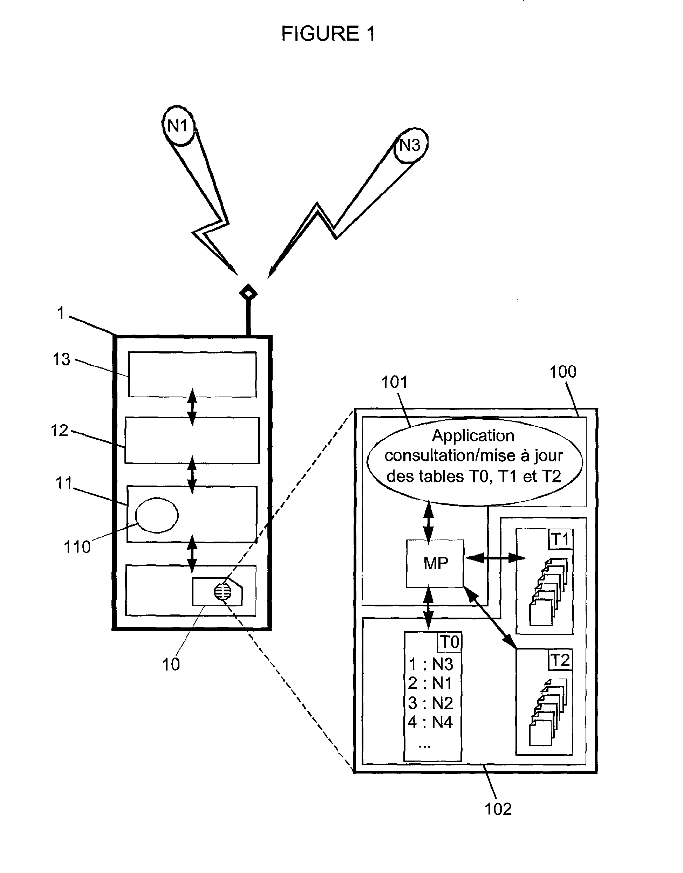

- la figure 1 représente un schéma du terminal selon l'invention, contenant l'objet portable selon l'invention.
- La figure 2 représente un schéma du procédé selon l'invention.
   La présente invention concerne un procédé et un système pour l'optimisation des communications téléphoniques à l'étranger. Le système est constitué d'un objet (10) portable implémenté dans un terminal (1) d'un utilisateur, en communication avec des réseaux (N1, N2, N...) d'opérateurs de télécommunication.

Dans un mode de réalisation non exclusif de l'invention, le terminal (1) de l'utilisateur est un téléphone portable et l'objet (10) portable est la carte SIM fournie par l'opérateur téléphonique auprès duquel il possède un abonnement. Dans d'autres variantes de réalisation, le terminal (1) pourra également être un ordinateur portable, un assistant digital personnel (PDA, pour l'anglais « personal digital assistant ») ou tout autre objet électronique pouvant communiquer sur des réseaux de communications établis par des opérateurs. L'objet (10) portable pourra, en conséquence, consister en n'importe quel type de carte à puce permettant l'exécution d'applications diverses par des terminaux.

Lorsqu'un utilisateur (souscripteur d'abonnement) entre dans un pays étranger, il entre dans une zone géographique généralement non couverte par le réseau de l'opérateur auprès duquel il possède un abonnement. Lors de l'initialisation du terminal (1), celui-ci tente d'établir une connexion avec un réseau d'un opérateur et détecte un changement (20) de pays. Il réalise alors automatiquement une étape (21) de détermination du pays dans lequel il se trouve, grâce à des moyens de détermination de l'identité d'au moins une zone géographique. Lorsque le pays est déterminé, le terminal (1) envoie à la carte (10) SIM une requête (22) de sélection d'un réseau opérateur, pour l'établissement d'une communication avec celui-ci. La carte (10) SIM réalise alors une recherche (23) de la liste de réseaux d'opérateurs disponibles dans le pays identifié. Le pays en question est en général une zone géographique couverte par plusieurs réseaux d'opérateurs différents, dont la plupart possèdent des accords avec les opérateurs des autres pays. Ces accords définissent en général des quantités minimales de communications (taux d'usage attendu) à partir desquelles peuvent être appliqués des tarifs préférentiels entre les opérateurs, pour les communications de leurs abonnés en voyage à l'étranger. Les opérateurs sont capables de prévoir statistiquement le nombre moyen de souscripteurs d'abonnement qui voyagent dans un pays donné et peuvent donc prévoir un taux d'usage attendu statistique individuel pour chaque souscripteur d'abonnement, de façon à ce que l'ensemble des communications passées par ces souscripteurs d'abonnement atteigne le taux d'usage attendu global, correspondant aux minima définis par les accords entre les opérateurs. Le taux d'usage attendu statistique individuel est appelé ici simplement taux d'usage attendu, car c'est celui qui est utilisé dans l'invention, en prévision statistique. L'invention prévoit donc une étape d'enregistrement, dans les moyens (102) de mémorisation de la carte (10) SIM de l'utilisateur en voyage, d'une table (T2) de stockage des taux d'usage attendu (TUA) pour chacun des réseaux opérateurs (N1, N2, N3, N...) couvrant les différents pays. Cette étape d'enregistrement peut être réalisée sous le contrôle de l'opérateur auprès duquel l'utilisateur possède un abonnement, avant l'entrée de l'utilisateur dans une zone géographique étrangère ou sous le contrôle d'un des opérateurs dont les réseaux couvrent la zone géographique étrangère, une fois l'utilisateur entré dans cette zone. Lorsque l'utilisateur est entré dans cette zone géographique, l'invention prévoit également que les opérateurs dont les réseaux couvrent ladite zone puissent envoyer de nouveau, vers la carte (10) SIM, les taux d'usage attendus pour chaque réseau d'opérateur dans la zone, pour une mise à jour éventuelle de ces informations. L'invention prévoit également l'envoi des taux d'usages attendus par les réseaux d'opérateurs de pays voisins. Ces étapes de reconnaissance du pays et d'envois des taux d'usages attendus par les réseaux d'opérateurs vers la carte (10) SIM mettent en oeuvre le terminal (1) selon l'invention, qui possède des moyens (12) de communications avec les réseaux d'opérateurs lui permettant de recevoir ces informations et des moyens de transmission à l'objet (10) portable du taux d'usage attendu par les réseaux d'opérateurs, pour leur stockage dans la table (T2), dans les moyens (102) de mémorisation de l'objet (10) portable.

Les moyens (102) de mémorisation de la carte SIM (10) contiennent également une table (T1) de stockage des taux d'usage effectif (TUE) des réseaux d'opérateurs. Cette table (T1) permet de comptabiliser les communications effectuées par l'utilisateur avec chacun des réseaux (N1, N2, N3, N...) d'opérateurs. Elle est mise à jour à chaque communication effectuée avec un réseau d'opérateur, de façon à pouvoir comparer l'usage des différents réseaux effectivement réalisé par rapport à l'usage qui en est attendu d'après les accords entre les opérateurs. Cette mise à jour des taux d'usage effectifs dans la table (T1) de la carte (10) SIM est réalisée par l'application (101) exécutée sur les moyens (100) de traitement de la carte (10) SIM, grâce à une fonction de mesure du taux d'usage effectif pour chacun des réseaux d'opérateurs. Cette fonction de mesure de l'usage en cours peut consister en une mesure du nombre de communications établies avec chacun des réseaux d'opérateurs ou en une mesure de la somme des durées des communications établies avec chaque réseau. L'objet (10) portable ou le terminal (1) peuvent posséder des moyens de mesure de la durée des communications. Selon le cas, la mesure de la durée des communications sera effectuée par la carte (10) SIM qui reçoit du terminal (1) un signal au début et à la fin de chaque communication, grâce à des moyens de signalement du début (24) et de la fin (25) de chaque communication, puis met à jour automatiquement la table (T1) de stockage des taux d'usage effectifs ou bien le terminal (1) mesure la durée des communications et transmet cette mesure à la carte (10) SIM qui met à jour la table (T1). La carte (10) SIM comporte également des moyens (100) de traitement à microprocesseur (MP) permettant, en outre, l'exécution d'une application (101) qui gère les différentes étapes permettant l'optimisation des communications du terminal (1) de l'utilisateur avec les réseaux d'opérateurs (N1, N2, N3, N...), comme les étapes de consultation et de mise à jour des tables stockées dans les moyens (102) de mémorisation de la carte (10) SIM. Cette application (101) exécutée sur les moyens (100) de traitement de la carte (10) SIM coopère avec une application (110) exécutée sur les moyens (11) de traitement du terminal (1) de l'utilisateur, pour l'interopérabilité des différents moyens du terminal (1) et de la carte (10) SIM. L'application (110) du terminal permet également l'interactivité de l'utilisateur avec son terminal (1), via des moyens (13) de saisie et d'affichage présents dans le terminal (1). L'application (101) de la carte (10) SIM réalise, en outre, le calcul de la différence entre le taux d'usage attendu (TUA) et le taux d'usage effectif (TUE) pour chacun des réseaux d'opérateurs couvrant la zone géographique dans laquelle l'utilisateur se trouve avec son terminal (1) et/ou sa carte (10) SIM. Le résultat de ce calcul permet l'établissement d'une liste hiérarchisée des réseaux d'opérateurs (N1, N2, N3, N...), mémorisée dans une table (T0) stockée dans les moyens (102) de mémorisation de la carte (10) SIM. Cette liste hiérarchisée permet le classement des réseaux (N1, N2, N3, N...) en fonction de la différence entre les taux d'usage attendus (TUA) et les taux d'usage effectifs (TUE) pour chacun des réseaux d'opérateurs. L'application (101) permet ainsi que, lorsque l'utilisateur souhaite réaliser une communication, la priorité soit donnée, par exemple, au réseau pour lequel la différence entre le taux d'usage attendu et le taux d'usage effectif est la plus grande. Lors de la première utilisation de l'objet (10) portable dans une zone géographique étrangère, les taux d'usage effectifs ont une valeur nulle pour tous les réseaux d'opérateurs qui sont alors naturellement classés dans la table (T0) en fonction de leur taux d'usage attendus. La table (T2) contient également, pour chaque réseau d'opérateur, les tarifs appliqués par ces opérateurs une fois que leur taux d'usage attendus sont atteints. Lorsque les taux d'usages attendus sont atteints pour tous les réseaux, ceux-ci seront alors classés dans la table (T0) en fonction de leurs tarifs.

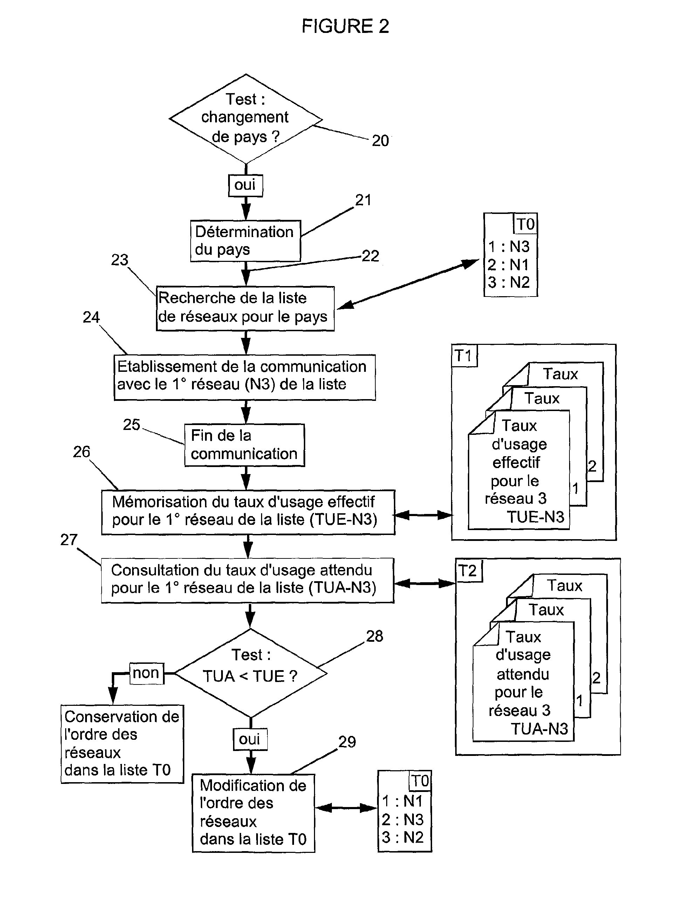

Dans l'exemple représenté sur la figure 2, le terminal (1) réalise une étape (21) de détermination du pays dans lequel l'utilisateur se trouve. Lorsque l'utilisateur tente d'établir une communication, son terminal (1) envoie à la carte (10) SIM une requête (22) de sélection d'un réseau d'opérateur. La carte (10) SIM réalise alors une recherche (23) de la liste des réseaux disponibles pour le pays identifié. Dans la liste (T0), les réseaux d'opérateurs sont classés en fonction de la différence entre leur taux d'usage attendu et leur taux d'usage effectif. Le réseau (N3) constitue un extremum de la liste (T0). La différence entre le taux d'usage attendu et le taux d'usage effectif pour le réseau (N3) est la plus importante de la liste et ce réseau est le premier du classement car c'est celui pour lequel il reste le plus de communications à établir pour atteindre le taux d'usage attendu. Dans une variante de réalisation, le classement des réseaux pourra être réalisé en privilégiant les réseaux pour lesquels il reste le moins de communications à établir pour atteindre le taux d'usage attendu, de façon à s'assurer d'atteindre les taux d'usage attendus pour le plus de réseaux possibles. Dans l'exemple de la figure 2, en réponse à la requête (22) de sélection d'un réseau envoyée par le terminal (1) à la carte (10) SIM, celle-ci sélectionne le réseau (N3) et envoi au terminal (1) les informations d'accès à ce réseau (N3), grâce à une fonction de transmission de ces informations d'accès à un réseau (N3) constituant un extremum de la liste (T0). Le terminal (1) possède des moyens de réception de ces informations d'accès au réseau sélectionné et établit, grâce à ses moyens (12) de communication, une communication (24) avec le réseau (N3). Le terminal (1) envoie à la carte (10) SIM un signal de début (24) et de fin (25) de communication, pour l'enregistrement (26) du taux d'usage effectif de ce réseau (N3) dans la table (T1). Comme expliqué ci-dessus la mesure de l'usage effectif des réseaux peut être réalisée par la carte (10) SIM ou le terminal (1). Selon le cas, si la mesure concerne uniquement le nombre de communications établies, la mise à jour (26) de la table (T1) de stockage des taux d'usage effectifs pourra être réalisée pendant la communication, alors que si la mesure concerne la durée des communications, la mémorisation (26) du nouveau taux d'usage effectif du réseau (N3) sera réalisée à la fin (25) de la communication. Une fois le taux d'usage effectif du réseau (N3) mis à jour (TUE-N3) par l'application (101) de la carte (10) SIM, celle-ci réalise une consultation (27) de la table (T2) pour en extraire le taux d'usage attendu pour ce réseau (TUA-N3) et le comparer avec le nouveau taux d'usage effectif (TUE-N3) mis à jour. Cette étape (28) de comparaison entre les taux d'usage attendus et les taux d'usage effectifs permet la mise à jour de la table (T0) de classement des réseaux d'opérateurs (N1, N2, N3, N...). Si le taux d'usage attendu est encore supérieur au taux d'usage effectif pour le réseau (N3), l'application (101) ne modifie pas l'ordre le liste hiérarchisée stockée dans la table (T0). Si, au contraire, le taux d'usage effectif est devenu supérieur au taux d'usage attendu pour le réseau (N3), alors les conditions définies par les accords entre l'opérateur du réseau (N3) et l'opérateur auprès duquel l'utilisateur possède un abonnement ont été remplies. L'application (101) de la carte (10) SIM peut alors, grâce à une fonction de modification (29) de la hiérarchie de la liste (T0), modifier l'ordre de la liste hiérarchisée stockée dans la table (T0), de façon à placer un nouveau réseau en premier dans la liste (N1, dans l'exemple de la figure 2). Lors de la prochaine utilisation du terminal (1), pour l'établissement d'une communication téléphonique dans cette même zone géographique, ce sera donc le réseau (N1) qui sera utilisé.

On comprend que l'on a ainsi réalisé un procédé permettant l'optimisation des communications entre un terminal (1) et des réseaux d'opérateurs couvrant une zone géographique, grâce à un objet (10) portable permettant une sélection des réseaux d'opérateurs de façon à remplir les conditions définies par les accords entre les opérateurs des différents pays.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Objet (10) portable **caractérisé en ce qu'**il comporte des moyens de sélectionner un réseau d'opérateur, parmi une pluralité de réseaux d'opérateurs (N1, N2, N3), en fonction de la différence entre un taux d'usage attendu (TUA) et un taux d'usage effectif (TUE) pour chaque opérateur.

2. Objet (10) portable selon la revendication 1, comportant des moyens (100) de traitement à microprocesseur (MP) coopérant avec des moyens (11) de traitement d'un terminal (1) permettant l'établissement de communications téléphoniques dans au moins une zone géographique couverte par au moins un réseau d'opérateur de télécommunication (N1, N2, N3), **caractérisé en ce qu'**il comporte :
- des moyens (102) de mémorisation contenant une table (T0) pour le stockage d'une liste hiérarchisée de réseaux d'opérateurs (N1, N2, N3) utilisables pour chaque zone géographique, classés selon un critère prenant en compte les consommations de communications effectuées avec chacun de ces réseaux d'opérateurs, une table (T2) pour le stockage du taux d'usage attendu (TUA) pour chaque réseau d'opérateur de la liste (T0) et une table (T1) pour le stockage du taux d'usage effectif (TUE) pour chaque réseau d'opérateur de la liste (T0) ;
- des moyens (100) de traitement comportant une fonction de mesure du taux d'usage effectif (TUE) de chaque réseau d'opérateur de la liste (T0), une fonction de modification de la hiérarchie de la liste (T0) selon l'évolution du taux d'usage effectif (TUE), par rapport au taux d'usage attendu (TUA), pour chacun des réseaux d'opérateur de la liste (T0) et une fonction de transmission, au terminal (1), d'informations d'accès au réseau d'opérateur constituant un extremum de la liste hiérarchisée (T0).

3. Objet (10) portable selon une des revendications 1 et 2, **caractérisé en ce que** l'extremum est le niveau le plus élevé de la hiérarchie (T0).

4. Objet (10) portable selon une des revendications 1 et 2, **caractérisé en ce que** l'extremum est le niveau le plus bas de la hiérarchie (T0).

5. Objet (10) portable selon une des revendications 1 à 4, **caractérisé en ce que** la fonction de mesure du taux d'usage effectif (TUE) de chaque réseau de la liste (T0) est une fonction d'incrémentation d'un compteur affecté à un opérateur, d'une unité à chaque communication établie avec le réseau de l'opérateur.

6. Objet (10) portable selon une des revendications 1 à 4, **caractérisé en ce que** la fonction de mesure du taux d'usage effectif (TUE) de chaque réseau de la liste est une fonction d'incrémentation d'un compteur affecté à un opérateur, d'un incrément correspondant à la durée de la communication établie avec le réseau de l'opérateur.

7. Objet (10) portable selon une des revendications 1 à 6, **caractérisé en ce qu'**il comporte des moyens de mesure de la durée des communications établies avec les réseaux d'opérateurs (N1, N2, N3).

8. Objet (10) portable selon une des revendications 1 à 7, **caractérisé en ce que** les moyens (100) de traitement de l'objet portable exécutent une application (101) pour la mesure du taux d'usage effectif (TUE) de chaque réseau de la liste (T0), pour la consultation et la mise à jour du contenu des tables (T0, T1, T2) stockées dans les moyens (102) de mémorisation de l'objet (10) portable et pour la transmission, au terminal (1), des informations d'accès au réseau d'opérateur constituant un extremum de la liste hiérarchisée (T0).

9. Objet (10) portable selon une des revendications 1 à 8, **caractérisé en ce que** la table (T2) de stockage du taux d'usage attendu (TUA) pour chaque réseau d'opérateur comporte également les tarifs préférentiels appliqués par chaque opérateur lorsque leur taux d'usage attendu est atteint et l'objet (10) portable comporte une fonction de classement des réseaux d'opérateurs (N1, N2, N3) selon ces tarifs, déclenchée à la place de la fonction de modification de la hiérarchie de la liste (T0) selon le taux d'usage effectif (TUE), lorsque les taux d'usage effectifs ont atteints la valeur des taux d'usages attendus (TUA) pour tous les réseaux.

10. Objet (10) portable selon une des revendications 1 à 9, **caractérisé en ce qu'**il consiste en un module d'identification de souscripteur d'abonnement, dit carte (10) SIM.

11. Terminal (1) pour l'utilisation de l'objet (10) portable selon une des revendications 1 à 10, **caractérisé en ce qu'**il comporte des moyens de détermination (21) de l'identité d'au moins une zone géographique couverte par plusieurs réseaux d'opérateurs (N1, N2, N3), des moyens d'envoi d'une requête (22) de sélection d'un réseau à l'objet (10) portable, des moyens de réception des informations d'accès au réseau sélectionné par l'objet (10) portable, des moyens (12) d'établissement d'une communication avec le réseau sélectionné et des moyens de signalement du début (24) et de la fin (25) d'une communication à l'objet (10) portable, pour prise en compte de la communication avec le réseau d'opérateur par l'objet (10) portable dans un taux d'usage effectif.

12. Terminal (1) selon la revendication 11, **caractérisé en ce qu'**il comporte des moyens de transmission à l'objet portable d'un taux d'usage attendu (TUA) par le réseau d'opérateur sélectionné, pour les utilisateurs d'un réseau d'opérateur d'une autre zone géographique.

13. Terminal (1) selon une des revendications 11 et 12, **caractérisé en ce qu'**il comporte des moyens de mesure de la durée des communications établies avec chacun des réseaux d'opérateurs (N1, N2, N3).

14. Terminal (1) selon une des revendications 11 à 13, **caractérisé en ce qu'**il comporte des moyens (11) de traitement exécutant une application (110), coopérant avec l'application (101) exécutée sur les moyens (100) de traitement de l'objet (10) portable et permettant l'interactivité de l'utilisateur avec le terminal (1), via des moyens (13) d'affichage et de saisie du terminal (1), pour l'établissement de communications téléphoniques dans au moins une zone géographique couverte par plusieurs réseaux d'opérateurs différents (N1, N2, N3).

15. Terminal (1) selon une des revendications 11 à 14, **caractérisé en ce qu'**il consiste en un téléphone sans fil.

16. Procédé d'établissement de communications téléphoniques dans au moins une zone géographique couverte par plusieurs réseaux d'opérateurs différents (N1, N2, N3), **caractérisé en ce qu'**il comporte au moins les étapes suivantes :
- envoi, par le terminal (1), d'une requête (22) de sélection d'un réseau d'opérateur à l'objet (10) portable ;
- consultation (23), par des moyens (100) de traitement de l'objet (10) portable, d'une table (T0) stockée dans des moyens (102) de mémorisation de l'objet (10) portable et contenant une liste hiérarchisée de réseaux d'opérateurs utilisables dans chaque zone géographique, classés en fonction de la différence entre le taux d'usage attendu (TUA) et le taux d'usage effectif (TUE) de chaque réseau d'opérateur, puis sélection d'un réseau d'opérateur constituant un extremum de la liste hiérarchisée (T0) ;
- mémorisation (26) du taux d'usage effectif (TUE) du réseau d'opérateur sélectionné, par mise à jour, à chaque communication (24, 25), d'une table (T1) stockée dans les moyens (102) de mémorisation de l'objet (10) portable et contenant les taux d'usage effectifs (TUE) pour chaque réseau d'opérateur ;
- comparaison (28), pour l'opérateur sélectionné, entre le taux d'usage effectif (TUE) mis à jour et le taux d'usage attendu (TUA), puis, le cas échéant, modification (29) de l'ordre de la liste hiérarchisée des réseaux d'opérateurs (N1, N2, N3) utilisables dans la zone géographique.

17. Procédé selon la revendication 16, **caractérisé en ce qu'**il comporte une étape d'établissement (24) d'une communication téléphonique par le terminal (1) avec un réseau d'opérateur (N3) constituant un extremum de la liste hiérarchisée (T0) et de mesure de l'usage en cours pour le réseau d'opérateur sélectionné.

18. Procédé selon une des revendications 16 et 17, **caractérisé en ce qu'**il comporte une étape préalable d'enregistrement, dans les moyens (102) de mémorisation de l'objet (10) portable, d'une table (T0) pour le stockage d'une liste hiérarchisée de réseaux d'opérateurs (N1, N2, N3) utilisables pour chaque zone géographique, classés en fonction de la différence entre un taux d'usage attendu (TUA) et un taux d'usage effectif (TUE) de chaque réseau d'opérateur, d'une table (T2) pour le stockage du taux d'usage attendu (TUA) pour chaque réseau d'opérateur de la liste et d'une table (T1) pour le stockage du taux d'usage effectif (TUE) pour chaque réseau d'opérateur de la liste.

19. Procédé selon la revendication 18, **caractérisé en ce que** l'étape préalable d'enregistrement des tables (T0, T1, T2) dans les moyens (102) de mémorisation de l'objet (10) portable est contrôlée par le réseau d'opérateur auquel est abonné le souscripteur d'abonnement utilisant l'objet (10) portable, cette étape étant réalisée avant l'entrée de l'utilisateur dans ladite zone géographique, non couverte par le réseau auquel il est abonné et couverte par plusieurs réseaux d'opérateurs différents (N1, N2, N3).

20. Procédé selon la revendication 19, **caractérisé en ce que** l'étape préalable d'enregistrement des tables (T0, T1, T2) dans les moyens (102) de mémorisation de l'objet (10) portable est contrôlée par un des réseaux d'opérateurs (N1, N2, N3) couvrant ladite zone géographique, cette étape étant réalisée après l'entrée de l'utilisateur dans ladite zone géographique, non couverte par le réseau auquel il est abonné et couverte par plusieurs réseaux d'opérateurs différents (N1, N2, N3).

21. Procédé selon une des revendications 16 à 20, **caractérisé en ce qu'**il comporte une étape de transmission, par le terminal (1), à l'objet (10) portable, du taux d'usage attendu (TUA) par le réseau d'opérateur sélectionné, pour les utilisateurs d'un réseau d'opérateur d'une autre zone géographique.

22. Procédé selon une des revendications 16 à 21, **caractérisé en ce qu'**il comporte une étape de consultation (27) d'une table (T2) stockée dans les moyens (102) de mémorisation de l'objet (10) portable et contenant les taux d'usage attendus (TUA) pour chaque réseau d'opérateur, une étape de vérification que le taux d'usage attendu (TUA) de l'opérateur est atteint et une étape de modification de l'ordre de la liste (T0) hiérarchisée des réseaux (N1, N2, N3) d'opérateurs utilisables dans la zone géographique consistant, lorsque les taux d'usage effectifs ont atteints la valeur des taux d'usage attendus pour tous les réseaux, en un classement des réseaux d'opérateurs selon les tarifs préférentiels appliqués par chaque opérateur.

23. Procédé selon une des revendications 16 à 22, **caractérisé en ce que** l'étape d'envoi, par le terminal (1), d'une requête (22) de sélection d'un réseau d'opérateur à l'objet (10) portable est précédée d'une étape de détermination (21) de la zone géographique dans laquelle l'utilisateur se trouve, suite à une étape de détection d'un changement (20) de pays lors de l'initialisation du terminal (1) de l'utilisateur.
